# EUROPÄISCHE PATENTANMELDUNG

(11) **EP 1 935 697 A1**
(43) Veröffentlichungstag der Anmeldung: **25.06.2008**
(21) Anmeldenummer: 07024821.6
(22) Anmeldetag: 20.12.2007
(51) Int. Cl.: B60K 6/12, B60T 1/10, B65F 3/00

(54) **Antriebssystem eines Fahrzeuges, imsbesondere eines Müllsammelfahrzeuges**

(30) Priorität: 21.12.2006 DE 202006019306 U
(71) Anmelder: FAUN Umwelttechnik GmbH & Co. KG, 86167 Augsburg (DE)
(72) Erfinder: Coulmont, Philippe, 07130 Soyons (FR)
(74) Vertreter: Laufhütte, Dieter

(57) **Zusammenfassung**

Die vorliegende Erfindung betrifft ein Antriebssystem eines Fahrzeugs, insbesondere eines Müllsammelfahrzeugs, aus einem Antriebsstrang mit einem Fahrmotor, vorzugsweise einem Verbrennungsmotor, zum Vortrieb des Müllsammelfahrzeugs und einem Hydraulikkreislauf mit einer Pumpe, welche mit dem Antriebsstrang verbunden oder verbindbar ist, wobei der Hydraulikkreislauf einen Hochdruckspeicher aufweist.

## Beschreibung

Die vorliegende Erfindung betrifft ein Antriebssystem eines Fahrzeugs, insbesondere eines Müllsammelfahrzeugs, aus einem Antriebsstrang mit einem Fahrmotor, vorzugsweise einem Verbrennungsmotor zum Vortrieb des Müllsammelfahrzeugs und einem Hydraulikkreislauf mit einer Pumpe, welche mit dem Antriebsstrang verbunden oder verbindbar ist.

Der Antriebsstrang treibt dabei über eine Kupplung und ein Getriebe das Fahrzeug an, während der Hydraulikkreislauf hydraulische Verbraucher wie z. B. eine Müllsammelvorrichtung oder eine Müllpresse antreibt. Dadurch, dass die Pumpe mit dem Antriebsstrang verbunden oder verbindbar ist, kann auch diese über den Fahrmotor angetrieben werden.

Bekannte Müllsammelfahrzeuge werden dabei über konventionelle Bremssysteme abgebremst, wobei teilweise auch hydraulische Bremssysteme bekannt sind. All diese Lösungen haben jedoch den Nachteil, dass die Bewegungsenergie des Fahrzeugs in den Bremsen in thermische Energie umgewandelt wird und damit verloren geht.

Aufgabe der vorliegenden Erfindung ist es deshalb, ein Antriebssystem zur Verfügung zu stellen, welches energiesparender arbeitet und dennoch einfach aufgebaut ist.

Erfindungsgemäß wird diese Aufgabe von einem Antriebssystem gemäß Anspruch 1 gelöst. In einem solchen erfindungsgemäßen Antriebssystem weist der Hydraulikkreislauf einen Hochdruckspeicher auf. In diesem Hochdruckspeicher lässt sich hydraulische Energie speichern und steht danach den hydraulischen Verbrauchern wieder zur Verfügung. Insbesondere ist es so möglich, die Bewegungsenergie des Fahrzeugs während des Bremsens zu speichern. Das erfindungsgemäße Antriebssystem ist dabei nur unwesentlich komplexer als ein Antriebssystem nach dem Stand der Technik, da es im Wesentlichen auf den bereits bekannten Komponenten aufbaut und zusätzlich lediglich den Hochdruckspeicher benötigt.

Das hydraulische Bremsen hat dabei den zusätzlichen Vorteil, dass die konventionellen Bremsen weniger belastet werden und so der Verschleiß und eine Überhitzung der konventionellen Bremsen verhindert wird. Ebenso erlaubt die Speicherung von hydraulischer Energie im Hochdruckspeicher, in Phasen, in denen genügend hydraulische Energie zum Betrieb eines hydraulischen Verbrauchers zur Verfügung steht, einen besonders leisen Betrieb des Fahrzeugs, da die Pumpe keine hydraulische Energie zur Verfügung stellen muss und so den Antriebsmotor nicht belastet.

In weiterhin vorteilhafter Weise ist der erfindungsgemäße Hochdruckspeicher über mindestens ein Ventil mit einer Ablaufseite der Pumpe verbindbar. Die Pumpe kann so Hydraulikflüssigkeit in den Hochdruckspeicher fördern und so hydraulische Energie speichern. Dadurch, dass die Pumpe bereits mit dem Antriebsstrang verbunden oder verbindbar ist, kann sie insbesondere in Abbremsphasen des Fahrzeugs dazu genutzt werden, das Fahrzeug abzubremsen und die Bewegungsenergie des Fahrzeugs in hydraulische Energie umzuwandeln.

In weiterhin vorteilhafter Weise ist der Hochdruckspeicher über mindestens ein Ventil mit einer Zulaufseite eines hydraulischen Verbrauchers verbindbar. So kann die im Hochdruckspeicher gespeicherte hydraulische Energie wieder nutzbar gemacht werden, indem der Hochdruckspeicher mit dem hydraulischen Verbraucher verbunden wird und diesen antreibt. Dabei können zur abwechselnden Verbindung des Hochdruckspeichers mit der Pumpe bzw. dem hydraulischen Verbraucher ein Ventil oder eine Anordnung aus mehreren Ventilen zum Einsatz kommen.

In weiterhin vorteilhafter Weise ist eine Ablaufseite der Pumpe über mindestens ein Ventil mit einer Zulaufseite eines hydraulischen Verbrauchers verbindbar. So kann der hydraulische Verbraucher wie im Stand der Technik über die Pumpe angetrieben werden. Der Hochdruckspeicher ist dabei von der Pumpe und/oder dem hydraulischen Verbraucher getrennt.

In weiterhin vorteilhafter Weise ist die Pumpe über ein PTO (Power Take Off) mit dem Antriebsstrang verbunden. Dies ist die aus dem Stand der Technik bekannte Verbindung über zumindest eine Kupplung zwischen Pumpe und Antriebsstrang, über die die Pumpe durch den Fahrmotor angetrieben werden kann. Da diese PTO im konventionellen System vorhanden ist, muss zum Speichern der Bewegungsenergie des Fahrzeugs beim Bremsen kein zusätzlicher konstruktiver Aufwand getrieben werden.

In weiterhin vorteilhafter Weise ist die Pumpe eine Verstellpumpe. Über ein Verstellen der Pumpe lässt sich so die von der Pumpe abgegebene hydraulische Energie steuern.

In weiterhin vorteilhafter Weise sind in dem erfindungsgemäßen Antriebssystem mehrere Hochdruckspeicher parallel geschaltet und verfügen über Absperrventile. Die einzelnen Hochdruckspeicher können so nacheinander gefüllt und auch wieder entleert werden. Durch mehrere parallel geschaltete Hochdruckspeicher können die einzelnen Hochdruckspeicher kleiner bauen, was insgesamt Kosten spart.

Weiterhin weist das erfindungsgemäße Antriebssystem in vorteilhafter Weise eine Steuerung auf, welche einen Speichermodus aufweist, während dem die Ablaufseite der Pumpe mit dem Hochdruckspeicher in Verbindung steht und Hydraulikfluid in den Hochdruckspeicher gepumpt wird. Die Steuerung kann so insbesondere die Ventile so ansteuern, dass über den Betrieb der Pumpe hydraulische Energie im Hochdruckspeicher gespeichert wird.

In weiterhin vorteilhafter Weise weist das erfindungsgemäße Antriebssystem eine Steuerung auf, welche einen Rückgabemodus aufweist, während dem Hydraulikfluid aus dem Hochdruckspeicher abfließt und z. B. einen hydraulischen Verbraucher antreibt. So kann die im Hochdruckspeicher gespeicherte Energie zurückgewonnen werden.

Hierzu steht vorteilhafterweise während dem Rückgabemodus der Hochdruckspeicher mit dem Zulauf eines hydraulischen Verbrauchers in Verbindung. So kann das Hydraulikfluid aus dem Hochdruckspeicher den hydraulischen Verbraucher antreiben.

In weiterhin vorteilhafter Weise schaltet die erfindungsgemäße Steuerung während Abbremsphasen des Fahrzeuges in den Speichermodus, so dass die Bewegungsenergie des Fahrzeugs in hydraulische Energie umgewandelt und gespeichert wird. Hierbei wird die Pumpe des Hydraulikkreislauf mit dem Antriebsstrang in Verbindung gesetzt und bremst so das Fahrzeug ab, während die von der Pumpe geförderte Hydraulikflüssigkeit im Hochdruckspeicher gespeichert wird. So lässt sich ohne großen konstruktiven Aufwand durch Verwendung eines Hochdruckspeichers und der entsprechenden Ventilanordnung und Steuerung die Bewegungsenergie des Fahrzeugs beim Bremsen speichern und geht nicht mehr verloren.

In weiterhin vorteilhafter Weise weist das erfindungsgemäße Antriebssystem eine Steuerung auf, welche einen Normalmodus aufweist, während dem eine Ablaufseite der Pumpe mit einer Zulaufseite eines hydraulischen Verbrauchers in Verbindung steht. Während diesem Normalmodus wird also der hydraulische Verbraucher wie bei bekannten Systemen direkt über die Pumpe angetrieben. Diese wird dabei ebenfalls wie bei bekannten Systemen über den Fahrmotor angetrieben.

In weiterhin vorteilhafter Weise wechselt die Steuerung bei dem erfindungsgemäßen Antriebssystem erst dann in den Rückgabemodus, wenn ausreichend Energie für einen Arbeitszyklus des hydraulischen Verbrauchers zur Verfügung steht. So ist sichergestellt, dass die in dem Hochdruckspeicher gespeicherte hydraulische Energie ausreicht, um einen Arbeitszyklus des hydraulischen Verbrauchers durchzuführen, so dass während des Arbeitszyklus nicht umgeschaltet werden muss. Dies ermöglicht weiterhin einen störungsfreien Betrieb der hydraulischen Verbraucher.

Steht genügend gespeicherte hydraulische Energie zum Betrieb des hydraulischen Verbrauchers zur Verfügung, kann ganz auf den Betrieb der Pumpe verzichtet werden, so dass auch der Fahrmotor nicht zusätzlich belastet wird. Hierdurch ergibt sich insbesondere bei der Müllsammelfahrt eine deutlich verminderte Geräuschbelastung.

Weiterhin weist das erfindungsgemäße Antriebssystem mindestens einen Sensor, insbesondere einen Drucksensor auf, über welchen die in dem Hochdruckspeicher gespeicherte Energie bestimmt werden kann. So kann z. B. durch Messen des Drucks im Hochdruckspeicher auf die im Hochdruckspeicher gespeicherte Energie geschlossen werden. Ebenso kann der Füllstand des Hochdruckspeichers bestimmt werden, so dass die Steuerung das Befüllen und Entleeren des Hochdruckspeichers bzw. der Hochdruckspeicher steuern kann. Werden mehrere Hochdruckspeicher verwendet, verfügt vorteilhafterweise jeder der Hochdruckspeicher über einen Sensor.

In weiterhin vorteilhafter Weise versorgt der mindestens eine Sensor dabei die Steuerung mit Daten. So kann diese die Ventile entsprechend ansteuern.

In weiterhin vorteilhafter Weise weist das erfindungsgemäße Antriebssystem eine Steuerung zur Ansteuerung mindestens des Ventils oder der Ventile auf, über welche Hochdruckspeicher, Pumpe und hydraulische Verbraucher verbindbar sind. Die Steuerung des erfindungsgemäßen Antriebssystem übernimmt dadurch die Ansteuerung der Ventile, über welche die unterschiedlichen Betriebsmodi einstellbar sind.

In weiterhin vorteilhafter Weise gehen dabei von einem Eingabeelement übermittelte Fahrerbefehle als Eingangsgrößen in die Steuerung ein. Der Fahrer kann so über Betätigen des Eingabeelementes z. B. in den Speichermodus wechseln, so dass das Fahrzeug abgebremst wird und die Bewegungsenergie des Fahrzeugs in hydraulische Energie umgewandelt und gespeichert wird. Das Wechseln zwischen Normalmodus und Rückgabemodus erfolgt dagegen vorteilhafterweise automatisch, ohne dass der Fahrer hierauf Einfluß nehmen müßte.

In weiterhin vorteilhafter Weise ist das Eingabeelement mit der Bremse des Fahrzeugs gekoppelt oder koppelbar. So kann automatisch bei Betätigen der Bremse auch der Speichermodus betätigt werden.

In weiterhin vorteilhafter Weise weist die Steuerung des erfindungsgemäßen Antriebssystems einen Drosselmodus auf, in welchem von der Pumpe abgegebene hydraulische Energie insbesondere über ein Drosselventil vernichtet wird. So kann auch bei gefüllten Hochdruckspeichern weiterhin hydraulisch gebremst werden.

Dabei schaltet die Steuerung vorteilhafterweise während Abbremsphasen des Fahrzeugs erst dann in den Drosselmodus, wenn der Hochdruckspeicher gefüllt ist. So kann so lange Energie gespeichert werden, wie dies möglich ist, und erst daraufhin die beim Bremsen gewonnene hydraulische Energie wieder hydraulisch vernichtet werden.

Die vorliegende Erfindung umfasst weiterhin ein Müllsammelfahrzeug mit einem Antriebssystem, wie es oben beschrieben wurde. Hierdurch ergeben sich die gleichen erfindungsgemäßen Vorteile wie beim Antriebssystem. Insbesondere ist es möglich, Energie und damit Kraftstoff zu sparen, wodurch zusätzlich auch die Umweltverschmutzung durch Abgase verringert wird. Zusätzlich vermindert das hydraulische Bremsen die Belastung der konventionellen Bremsen, so dass diese weniger stark abgenutzt werden und auch ein Überhitzen der Bremsen verhindert wird. Weiterhin nimmt auch die Lärmbelastung ab, das der Antriebsmotor in Fällen, in denen genügend Energie zum Antrieb des hydraulischen Verbrauchers gespeichert ist, die Pumpe nicht antreiben muss und somit abgeschaltet werden kann oder im Leerlauf laufen kann.

Die vorliegende Erfindung umfasst weiterhin ein Verfahren zum Betrieb eines erfindungsgemäßen Antriebssystems insbesondere eines Müllsammelfahrzeugs, welches insbesondere durch die Verwendung der erfindungsgemäßen Betriebsmodi das Antriebssystem so ansteuert, dass während Bremsphasen des Fahrzeugs die Bewegungsenergie des Fahrzeugs in hydraulische Energie umgewandelt und gespeichert wird. Das erfindungsgemäße Verfahren hat offensichtlich die gleichen Vorteile wie das erfindungsgemäße Antriebssystem.

Die vorliegende Erfindung wird nun anhand eines Ausführungsbeispielen und Zeichnungen näher beschrieben. Es zeigen:
- Figur 1:: ein Schaltbild eines Ausführungsbeispiels des erfindungsgemäßen Antriebssystem,
- Figur 2:: ein Teilschaltbild des Ausführungsbeispiels des erfindungsgemäßen Antriebssystems im Speichermodus und
- Figur 3:: ein Teilschaltbild des Ausführungsbeispiels des erfindungsgemäßen Antriebssystem im Rückgabemodus.

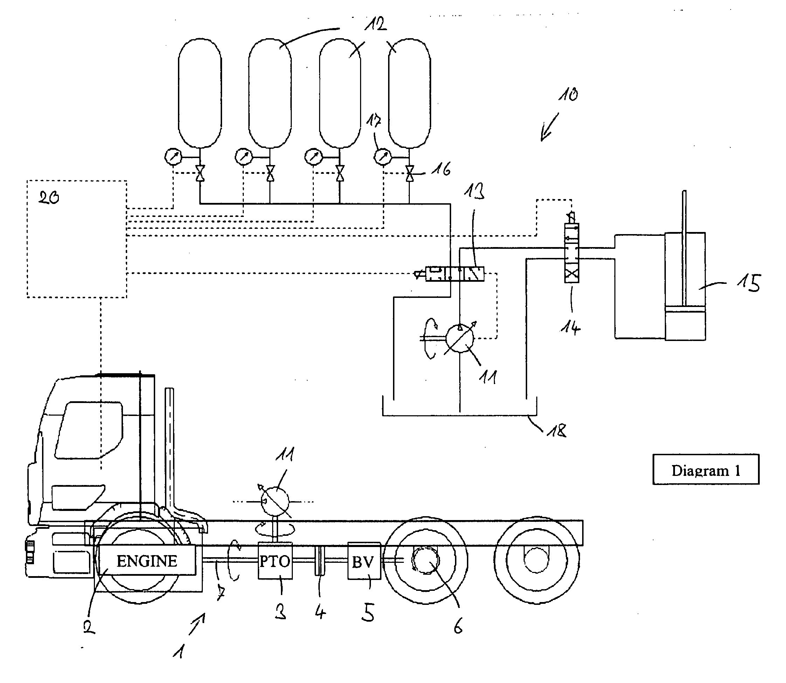

Figur 1 zeigt ein erfindungsgemäßes Müllsammelfahrzeug mit einem Ausführungsbeispiel des erfindungsgemäßen Antriebssystems. Bei dem erfindungsgemäßen Müllsammelfahrzeug ist dabei nur die Fahrerkabine und der Unterwagen gezeichnet, während die Aufbauten mit dem Müllsammelbehälter nicht dargestellt sind. Der Antriebsstrang des erfindungsgemäßen Antriebssystems umfasst dabei einen Fahrmotor 2, eine Kupplung 4 sowie das Getriebe 5, welche über eine Antriebswelle 7 miteinander verbunden sind. Über diesen Antriebsstrang wird eine Achse 6 angetrieben, welche das Müllsammelfahrzeug bewegt. In diesen Antriebsstrang 1 ist zwischen Fahrmotor 2 und Kupplung 4 die PTO (Power Take Off) 3 angeordnet, über welche die Pumpe 11 des Hydraulikkreislaufs 10 mit dem Fahrmotor 2 verbunden und so angetrieben wird.

Figur 1 zeigt weiterhin ein Schaltbild des Hydraulikkreislaufs 10 mit der Pumpe 11. In dem Hydraulikkreislauf 10 sind dabei die Hochdruckspeicher 12 vorgesehen, welche parallel angeordnet sind und über das Ventil 13 mit der Ablaufseite der Pumpe 11 verbindbar sind. Die Hochdruckspeicher 12 weisen zudem jeweils ein Absperrventil 16 sowie einen Drucksensor 17 auf. Des Weiteren ist ein hydraulischer Verbraucher 15, hier symbolisch als Hydrozylinder dargestellt, im Hydraulikkreislauf 10 vorgesehen. Der hydraulische Verbraucher 15 ist dabei über die Ventile 13 und 14 entweder mit der Ablaufseite der Pumpe 11 oder den Hochdruckspeichern 12 verbindbar.

Weiterhin ist eine Steuerung 20 vorgesehen, welche insbesondere die Ventile 13 und 14 ansteuert. Des Weiteren steuert die Steuerung 20 auch die Absperrventile 16 der Hochdruckspeicher 12 an. Die Steuerung 20 steuert weiterhin die Pumpe 11 an, welche als Verstellpumpe ausgeführt ist. Die Pumpe 11 ist dabei mit einer Load Sensing Steuerung ausgestattet. Als Eingangsgrößen für die Steuerung 20 dienen Fahrerbefehle, welche von einem nicht dargestellten Eingabeelement erzeugt werden, sowie die Daten von den Sensoren 17.

Die Ventile 13 und 14 sind jeweils 6/3-Wegeventile, über welche die erfindungsgemäßen Betriebsmodi geschaltet werden können. Bei der in Figur 1 gezeigten mittleren Stellung der Ventile 13 und 14 ist dabei der hydraulische Verbraucher 15 komplett vom übrigen hydraulischen System getrennt, während die Hochdruckspeicher 12 mit dem Hydraulikreservoir 18 in Verbindung stehen. Der hydraulische Verbraucher 15 kann nun im Normalmodus direkt über die Pumpe 11 angetrieben werden, indem das Ventil 14 in seine obere oder untere Position geschaltet wird, so dass der Ablauf der Pumpe 11 mit einer Seite des hydraulischen Verbrauchers in Verbindung steht, während die andere Seite des hydraulischen Verbrauchers mit dem Hydraulikreservoir 18 in Verbindung steht.

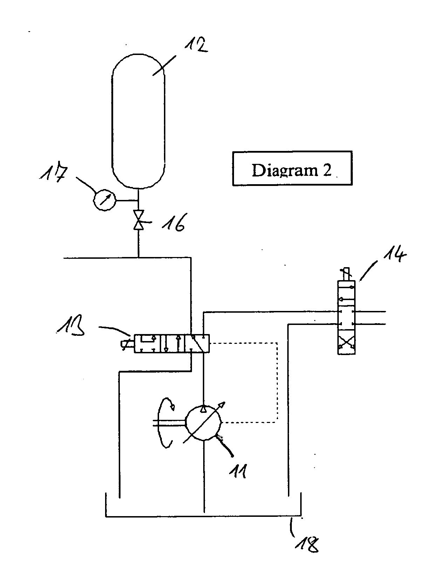

Figur 2 zeigt das erfindungsgemäße Antriebssystem in seinem Speichermodus, in welchem das Ventil 13 in seiner linken Position ist, so dass der Ablauf der Pumpe 11 mit dem Hochdruckspeicher 12 in Verbindung steht. So kann während Bremsphasen des Müllsammelfahrzeugs Hydraulikflüssigkeit vom Hydraulikreservoir 18 in den Hochdruckspeicher 12 gepumpt werden, wobei die Pumpe 11 die Bewegungsenergie des Fahrzeugs in hydraulische Energie umwandelt. Durch die Speicherung der Bewegungsenergie des Fahrzeugs während dem Bremsen kann der Treibstoffverbrauch des Müllsammelfahrzeugs erheblich reduziert werden, was auch die Umweltverschmutzung durch Abgase reduziert.

Die Steuerung 20 wird dabei über das Eingabeelement vom Fahrer des Müllfahrzeuges betätigt, wobei hier unterschiedliche Bedienmechanismen möglich sind. So ist es denkbar, dass der Fahrer anstatt zu bremsen das separate Eingabeelement betätigt. Alternaiv kann das Eingabeelement auch an die Bremse gekoppelt sein, so dass der Fahrer automatisch durch Betätigen der Bremse den Speichermodus betätigt und so hydraulisch bremst. Die konventionellen Bremsen werden dabei von der Steuerung nur noch hilfsweise betätigt, wenn die vom hydraulischen System zur Verfügung gestellte Bremswirkung nicht ausreicht. Ein solches hydraulisches Bremsen hat zudem den Vorteil, dass die konventionellen Bremsen weniger belastet werden und so auch weniger verschleißen. Auch wird ein Überhitzen der konventionellen Bremsen wirksam verhindert. Das Eingabeelement kann dabei entweder als Ein/Aus-Schalter oder als Proportionalsteuerung ausgeführt sein.

Steuerung 20 erkennt dabei die Füllstände der einzelnen Hochdruckspeicher 12 und steuert die Absperrventile 16 entsprechend an, so dass ein Hochdruckspeicher nach dem anderen befüllt wird. In vorteilhafter Weise wird dabei zunächst ein erster Hochdruckspeicher komplett befüllt, bevor das Absperrventil des nächsten Hochdruckspeichers geöffnet wird. Für den Fall, dass sämtliche Hochdruckspeicher komplett befüllt sind, kann die hydraulische Energie, welche von der Pumpe 11 in Abbremsphasen erzeugt wird, auch über ein nicht gezeigtes Drosselventil vernichtet werden, so dass auch bei komplett gefüllten Speichern immer noch eine hydraulische Bremswirkung zur Verfügung steht.

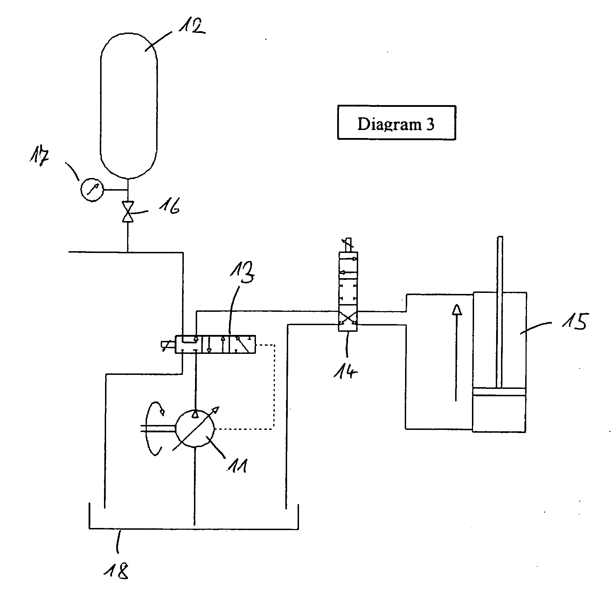

Figur 3 zeigt nun das erfindungsgemäße Antriebssystem im Rückgabemodus, in welchem das Ventil 13 in seiner rechten Position ist und der Hochdruckspeicher 12 mit dem hydraulischen Verbraucher 15 in Verbindung steht. So kann durch entsprechendes Schalten des Ventils 14 in die obere oder die untere Position der hydraulische Verbraucher 15 mit der im Hochdruckspeicher 12 gespeicherten Energie angetrieben werden. Auch hierbei übernimmt die Steuerung 20 das entsprechende Speichermanagement der Hochdruckspeicher 12, indem es die Absperrventile entsprechend ansteuert.

Hierbei wird nur in den Rückgabemodus geschaltet, wenn ausreichend gespeicherte Energie in den Hochdruckspeichern zur Verfügung steht, um zumindest einen Zyklus des hydraulischen Verbrauchers 15 durchzuführen. Im Rückgabemodus ist die Pumpe 11 sowohl vom Hochdruckspeicher 12 als auch vom hydraulischen Verbraucher 15 getrennt, so dass die hydraulische Energie einzig von den Hochdruckspeichern 12 geliefert wird. Dies erlaubt es, ohne eine Belastung des Fahrmotors die hydraulischen Verbraucher des Müllsammelfahrzeugs zu betreiben, was insbesondere die Lärmbelastung während des Müllsammelns erheblich reduziert.

## Patentansprüche

1. Antriebssystem eines Fahrzeugs, insbesondere eines Müllsammelfahrzeugs, aus einem Antriebsstrang (1) mit einem Fahrmotor (2), vorzugsweise einem Verbrennungsmotor, zum Vortrieb des Müllsammelfahrzeugs und einem Hydraulikkreislauf (10) mit einer Pumpe (11), welche mit dem Antriebsstrang (1) verbunden oder verbindbar ist,
**dadurch gekennzeichnet,**
**daß** der Hydraulikkreislauf (2) einen Hochdruckspeicher (12) aufweist.

2. Antriebssystem nach Anspruch 1, wobei der Hochdruckspeicher (12) über mindestens ein Ventil (13) mit einer Ablaufseite der Pumpe verbindbar ist.

3. Antriebssystem nach Anspruch 1, wobei der Hochdruckspeicher (12) über mindestens ein Ventil (13, 14) mit einer Zulaufseite eines hydraulischen Verbrauchers (15) verbindbar ist.

4. Antriebssystem nach einem der vorangegangenen Ansprüche, wobei eine Ablaufseite der Pumpe (11) über mindestens ein Ventil (13,14) mit einer Zulaufseite eines hydraulischen Verbrauchers (15) verbindbar ist.

5. Antriebssystem nach einem der vorangegangenen Ansprüche, wobei die Pumpe (11) über einen PTO (Power Take Off) (3) mit dem Antriebsstrang (1) verbunden ist.

6. Antriebssystem nach einem der vorangegangenen Ansprüche, wobei die Pumpe (11) eine Verstellpumpe ist.

7. Antriebssystem nach einem der vorangegangenen Ansprüche, wobei mehrere Hochdruckspeicher (12) parallel geschaltet sind und über Absperrventile (16) verfügen.

8. Antriebssystem nach einem der vorangegangenen Ansprüche, mit einer Steuerung (20), welche einen Speichermodus aufweist, während dem die Ablaufseite der Pumpe (11) mit dem Hochdruckspeicher (12) in Verbindung steht und Hydraulikfluid in den Hochdruckspeicher (12) gepumpt wird.

9. Antriebssystem nach einem der vorangegangenen Ansprüche, mit einer Steuerung (20), welche einen Rückgabemodus aufweist, während dem Hydraulikfluid aus dem Hochdruckspeicher (12) abfließt.

10. Antriebssystem nach einem der vorangegangenen Ansprüche, wobei während des Rückgabemodus der Hochdruckspeicher (12) mit dem Zulauf eines hydraulischen Verbrauchers (15) in Verbindung steht.

11. Antriebssystem nach Anspruch 8, wobei die Steuerung (20) während Abbremsphasen des Fahrzeugs in den Speichermodus schaltet, so daß die Bewegungsenergie des Fahrzeugs in hydraulische Energie umgewandelt und gespeichert wird.

12. Antriebssystem nach einem der vorangegangenen Ansprüche, mit einer Steuerung (20), welche einen Normalmodus aufweist, während dem eine Ablaufseite der Pumpe (11) mit einer Zulaufseite eines hydraulischen Verbrauchers (15) in Verbindung steht.

13. Antriebssystem nach Anspruch 9, wobei die Steuerung (20) erst in den Rückgabemodus wechselt, wenn ausreichend Energie für einen Arbeitszyklus des hydraulischen Verbrauchers (15) zur Verfügung steht.

14. Antriebssystem nach einem der vorangegangenen Ansprüche, mit mindestens einem Sensor (17), insbesondere einem Drucksensor, über welchen die in dem Hochdruckspeicher (12) gespeicherte Energie bestimmt werden kann.

15. Antriebssystem nach Anspruch 14, wobei der mindestens eine Sensor (17) die Steuerung (20) mit Daten versorgt.

16. Antriebssystem nach einem der vorangegangenen Ansprüche, mit einer Steuerung (20) zur Ansteuerung mindestens des Ventils oder der Ventile (13,14), über welche Hochdruckspeicher (12), Pumpe (11) und hydraulischer Verbraucher (15) verbindbar sind.

17. Antriebssystem nach einem der vorangegangenen Ansprüche, wobei von einem Eingabeelement übermittelte Fahrerbefehle als Eingangsgrößen in die Steuerung (20) eingehen.

18. Antriebssystem nach Anspruch 17, wobei das Eingabeelement mit der Bremse des Fahrzeugs gekoppelt oder koppelbar ist.

19. Antriebssystem nach einem der vorangegangenen Ansprüche, wobei die Steuerung (20) einen Drosselmodus aufweist, in welchem von der Pumpe (11) abgegebene hydraulische Energie insbesondere über ein Drosselventil vernichtet wird.

20. Antriebssystem nach Anspruch 19, wobei die Steuerung (20) während Abbremsphasen des Fahrzeugs in den Drosselmodus schaltet, wenn der Hochdruckspeicher (12) gefüllt ist.

21. Müllsammelfahrzeug mit einem Antriebssystem nach einem der vorangegangenen Ansprüche.
